# FASCICULE DE BREVET EUROPEEN

(11) **EP 0 551 776 B1**
(45) Date de publication et mention de la délivrance du brevet: **18.03.1998**
(21) Numéro de dépôt: 92403135.4
(22) Date de dépôt: 20.11.1992
(51) Int. Cl.: B32B 3/12, B32B 15/08, E04C 2/26, E04C 2/36

(54) **Panneau composite structurel du type sandwich et son procédé de fabrication**
Strukturale Sandwichverbundplatte und Verfahren zu ihrer Herstellung
Structural composite sandwich panel and method of manufacture

(30) Priorité: 14.01.1992 FR 9200307
(43) Date de publication de la demande: 21.07.1993
(73) Titulaire: INDUPLAST S.A., F-75008 Paris (FR)
(72) Inventeur: Barbier, Alain, F-78360 Bures (FR); Filippi, Richard, F-78590 Noisy Le Roi (FR); Hardy, Pascal, F-78480 Verneuil sur Seine (FR)
(74) Mandataire: Armengaud Ainé, Alain

(56) Documents cités:
- EP-A- 0 056 713
- EP-A- 0 296 067
- US-A- 3 467 569
- US-A- 4 477 513

## Description

La présente invention est relative à un panneau composite structurel du type sandwich, ainsi qu'à son procédé de fabrication, ce panneau étant destiné plus particulièrement à la réalisation de pièces ou éléments de carrosserie notamment pour l'industrie automobile.

On connaît à l'heure actuelle des pièces, commercialisées sous la dénomination 〈〈 NIDACAR 〉〉 par la présente titulaire, faisant appel à une âme alvéolaire revêtue de matériaux thermoplastiques renforcés fibres pour réaliser des panneaux structurels.

On connaît également (US-A-3 467 569) des panneaux composites comprenant une âme en résine synthétique expansée en forme de mousse recouverte d'une couche en matériau thermoplastique et d'un revêtement extérieur métallique mince adhérant à ladite âme par l'intermédiaire d'une couche adhésive.

Cette technique connue présente le défaut de ne pas permettre l'obtention d'un état de surface acceptable exigé pour la réalisation d'éléments de carrosserie. La présente invention s'est donc fixé pour objectif la réalisation de panneaux composites structurels présentant un excellent état de surface permettant notamment la réalisation d'éléments de carrosserie.

A cet effet la présente invention vise en premier lieu un panneau composite structure comprenant une âme en matériau plastique recouverte d'une couche d'un matériau thermoplastique et d'un revêtement extérieur métallique mince adhérant à ladite âme par l'intermédiaire d'une couche adhésive, caractérisé en ce que ladite âme est constituée d'un un panneau sandwich composé d'une âme thermoplastique, en nids d'abeille et de peaux réalisées en matière thermoplastique renforcée de fibres, disposées sur les faces supérieure et inférieure dudit panneau sandwich, perpendiculairement à l'axe des alvéoles, et en ce que ledit revêtement métallique mince est fixé sur l'une au moins desdites faces du panneau sandwich par l'intermédiaire de la dite couche adhesive constituée d'une pellicule thermoscellable insérée entre le panneau et chaque revêtement métallique mince.

Selon l'invention lesdites peaux sont réalisées en un matériau thermoplastique renforcé de fibres, estampable, et ladite pellicule thermoscellable peut être constituée d'un matériau thermoplastique pouvant être appliqué sous la forme d'un film ou d'une poudre déposée sur le revêtement métallique par dépôt électrostatique ou en lit fluidisé.

Selon l'invention, le revêtement métallique est constitué de préférence d'aluminium et il se présente sous la forme d'une tôle plane ou d'une pièce présentant une configuration déterminée.

L'invention vise en second lieu un procédé de réalisation d'un panneau composite structurel du type défini ci-dessus caractérisé en ce que ledit revêtement métallique, qui est constitué de préférence d'aluminium, est appliqué par l'intermédiaire d'une pellicule thermoscellable sur le panneau sandwich, sous pression et à une température déterminée qui est choisie de façon à être intermédiaire entre le point de fusion de ladite pellicule thermoscellable et le point de fusion des matériaux constituant ledit panneau sandwich, pendant un temps suffisant à la fusion de ladite pellicule, ce qui solidarise l'ensemble des constituants du panneau.

Selon un mode de mise en oeuvre du procédé objet de l'invention tel que défini ci-dessus, la pellicule thermoscellable est appliquée sur ledit revêtement métallique préalablement à la constitution du panneau composite, en étuve ou sous presse, à une température de l'ordre de 200 à 220° C, le revêtement métallique ainsi pourvu de sa pellicule thermoscellable étant ensuite appliqué sur l'une des faces au moins du panneau sandwich, placé entre les plateaux d'une presse portés à ladite température déterminée.

Selon un autre mode de mise en oeuvre du procédé objet de l'invention les différents constituants du panneau composite : panneau sandwich, pellicules thermoscellables et revêtements métalliques sont placés, sous la forme d'un empilage, entre les plateaux d'une presse ou dans un moule porté à ladite température déterminée.

Selon encore un autre mode de mise en oeuvre du procédé selon l'invention on fait passer entre deux dispositifs chauffants à cylindres rotatifs ou chenilles portés à ladite température, un ruban composé par l'empilage des différents constituants du panneau composite : ledit panneau sandwich, la ou les pellicules thermoscellables et le ou les revêtements métalliques.

D'autres caractéristiques et avantages de la présente invention ressortiront de la description faite ci-après en référence aux dessins annexés qui en illustrent des modes de réalisation et de mise en oeuvre. Sur les dessins :
- la figure 1 est une vue en coupe verticale d'un panneau structurel composite selon la présente invention ;
- les figures 2 et 3 sont des vues similaires à la figure 1 représentant deux variantes du panneau selon l'invention ;
- la figure 4 illustre, en une vue en perspective une étape de fabrication du panneau structurel composite selon la présente invention au cours de laquelle la pellicule thermoscellable est appliquée sur le revêtement métallique;
- la figure 5 illustre, en une vue similaire à la figure 4, l'étape suivante de fabrication du panneau structurel selon la présente invention ;
- la figure 6 est une vue en coupe verticale de la figure 5;
- la figure 7 est une vue en coupe verticale illustrant un second mode de mise en oeuvre du procédé objet de l'invention et,
- la figure 8 est également une vue en coupe verticale d'un troisième mode de mise en oeuvre du procédé selon la présente invention.

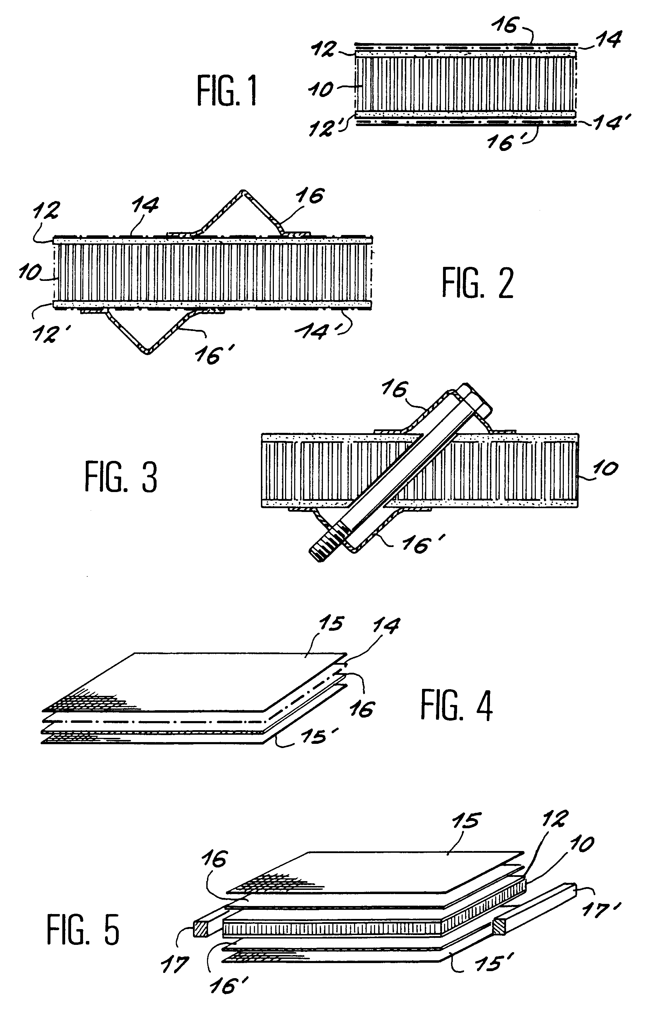

En se référant aux figures 1 à 3 on voit que le panneau composite structurel selon la présente invention comporte :
- un panneau du type sandwich composé d'une âme 10 en matériau thermoplastique munie sur ses faces supérieure et inférieure d'une peau 12, 12' respectivement, en matière thermoplastique renforcée fibres et estampable. L'âme 10 est du type alvéolaire en nids d'abeille réalisée en matière thermoplastique, en polypropylène dans le présent exemple non limitatif, les peaux 12, 12' étant disposées perpendiculairement à l'axe des alvéoles ;
- une pellicule thermoscellable, 14, 14' respectivement, déposée sur chacune des peaux 12, 12' du panneau sandwich, cette pellicule thermoscellable étant constituée d'un matériau thermoplastique en polypropylène greffé anhydride maléique, dans le présent exemple non limitatif et,
- un revêtement métallique 16, 16' disposé sur l'une au moins des faces du panneau sandwich munie de sa pellicule thermoscellable 14 ou 14'.

Ce revêtement métallique est constitué de préférence d'aluminium car la structure de surface de ce métal, proche du verre, permet un bon accrochage en présence d'anhydride maléique. Dans l'exemple illustré par la figure 1 il est réalisé sous la forme d'une tôle plane et dans les exemples illustrés par les figures 2 et 3 il est réalisé sous la forme de pièces 16, 16' embouties. Il est bien entendu possible de donner toutes formes ou configurations désirées aux revêtements métalliques du panneau structurel selon la présente invention, ce revêtement pouvant prendre la forme d'un accessoire comme illustré sur les figures 2 et 3.

Ainsi qu'on l'a précisé dans le préambule de la présente description, l'invention a également pour objet un procédé permettant de réaliser le panneau composite structurel tel que représenté sur les figures 1 à 3, ce procédé étant conçu de façon à permettre la solidarisation du revêtement métallique et du panneau sandwich.

Ainsi qu'on l'a défini ci-dessus ce procédé se caractérise par le fait que le revêtement métallique est appliqué par l'intermédiaire d'une pellicule thermoscellable sur le panneau sandwich, sous pression et à une température déterminée qui est choisie de façon à être intermédiaire entre le point de fusion de la pellicule thermoscellable et le point de fusion des matériaux qui constituent le panneau sandwich, l'application de la température et de la pression s'effectuant pendant un temps suffisant pour permettre la fusion de la pellicule assurant la solidarisation du revêtement métallique de l'ensemble des constituants du panneau.

Dans l'exemple de mise en oeuvre illustré par les figures 4 à 6, on commence par munir le revêtement métallique de sa pellicule thermoscellable. Sur la figure 4 on a représenté le revêtement métallique 16 sous la forme d'une tôle d'aluminium sur laquelle on applique la pellicule thermoscellable 14. A titre d'exemple non limitatif, cette pellicule peut être constituée d'un thermoplastique plus anhydride maléique, présentant un point de fusion de 147° C. On peut protéger les surfaces de la tôle d'aluminium 16 et de la pellicule thermoscellable 14 à l'aide d'une pellicule non adhérente constituée par exemple d'un tissu enduit de poly-tétrafluoroéthylène 15,15'. L'ensemble constitué par l'empilage des éléments mentionnés ci-dessus et illustré par la figure 4 est placé entre les plateaux d'une presse hydraulique dont la température est régulée à une valeur de l'ordre de 200 à 220° C. Dans cet exemple, la pression exercée par les plateaux de la presse était de 5.10 ⁵ à 10⁶Pa et le temps d'application de cette pression était de l'ordre d'une minute.

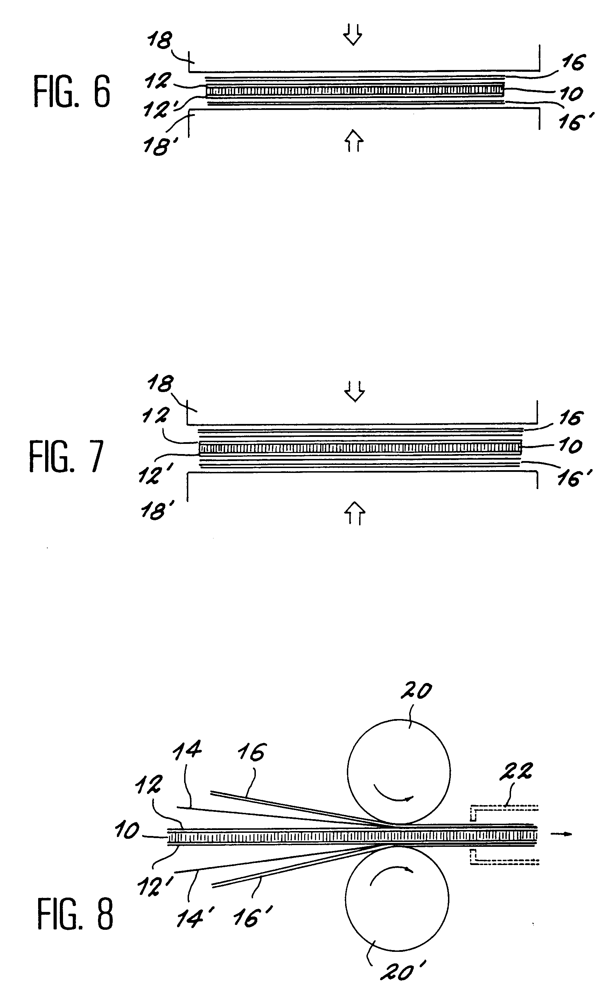

Dans l'étape suivante illustrée par les figures 5 et 6 on place entre les plateaux 18, 18' de la presse, l'ensemble constitué par l'empilage des constituants suivants : sandwich 10 muni sur ses deux faces de la peau 12, 12' en matière thermoplastique renforcée estampable et les tôles d'aluminium 16,16' provenant de l'étape illustrée par la figure 4 et donc pourvues de leur pellicule thermoscellable. On peut prévoir également la mise en place d'un tissu de protection 15, 15', similaire à celui utilisé lors de l'étape de la figure 4. On peut prévoir des cales latérales 17, 17', comme illustré sur la figure 5, ces cales déterminant l'épaisseur finale du panneau structurel composite ainsi réalisé.

On a donné ci-après deux exemples de mise en oeuvre non limitatifs en ce qui concerne les température, pression et durée de traitement à la presse.

### Exemple 1

- température des plateaux 18,18' : 180°C
- pression exercée : 5.10⁴Pa
- lancement du refroidissement des plateaux après 30 secondes de chauffage et avec une vitesse de refroidissement de 10°C/minute,
- température de sortie de presse : 130°C

### Exemple 2

- température des plateaux 18, 18'' : 160°C Cette température est choisie intermédiaire entre la température de fusion (147°C) de la pellicule thermoscellable 14, 14' et le point de fusion (166°C) de la matière plastique constituant le panneau sandwich 10.
- pression exercée par les plateaux 18, 18' : 5.10⁴Pa.
- la sortie de la presse s'est effectuée après deux minutes de chauffage, ou à la température de manipulation après refroidissement.

Dans la variante de mise en oeuvre du procédé selon l'invention illustrée par la figure 8, on opère en continu en faisant passer entre deux cylindres chauffants et rotatifs 20, 20', un ruban constitué par l'empilage des différents constituants du panneau composite à réaliser : panneau sandwich 10 avec ses deux peaux 12, 12' ; pellicules thermoscellables 14, 14' et tôles métalliques 16, 16', de préférence d' aluminium. La température des cylindres 20, 20' est choisie comme défini préalablement, c'est-à-dire intermédiaire entre le point du fusion des pellicules thermoscellables 14, 14' et le point de fusion des matériaux constituants le panneau sandwich 10,12, 12'. Le passage de ces constituants entre les deux cylindres 20 20' assure leur solidarisation et le panneau composite structurel continu ainsi réalisé est refroidi en 22.

On obtient finalement, grâce à l'invention, un panneau ou pièce composite qui se caractérise notamment par les avantages suivants :
- excellent état de surface grâce à la combinaison du revêtement métallique extérieur et de la peau thermoplastique renforcé, l'un assurant l'aspect de surface, l'autre évitant le marquage occasionné par les alvéoles constituant l'âme du panneau ;
- bonne résistance aux chocs ;
- excellente rigidité de la structure réalisée ;
- légèreté ;
- bonne isolation acoustique et thermique ;
- possibilité d'ajouter des revêtements pour apporter au panneau des fonctions supplémentaires : complément d'isolation phonique, acoustique ou thermique, plaques de décoration, etc...

Il demeure bien entendu que la présente invention n'est pas limitée aux exemples de réalisation ou de mise en oeuvre décrits et/ou représentés ici, mais qu'elle en englobe toutes les variantes satisfaisant les definitions des revendications indépendantes ci-après. C'est ainsi notamment que la pellicule thermoscellable 14, 14' peut être appliquée sous la forme d'un film ou d'une poudre, par exemple par dépôt électrostatique ou en lit fluidisé.

Dans le cas d'un film, ce dernier peut être perforé ou non, les perforations permettant à l'air chaud emprisonné lors de l'application du film sur le revêtement métallique de s'échapper plus facilement.

Dans les exemples illustrés par les figures 1 à 8 les panneaux ont été représentés plans et à faces parallèles, mais il est tout à fait possible d'obtenir des panneaux similaires à configurations autres (bombés, courbés, nervurés...) du fait de leur composition thermoplastique et des températures de mise en oeuvre entraînant un certain ramollissement de la matière.

## Revendications

1. Panneau composite structure comprenant une âme en matériau plastique recouverte d'une couche d'un matériau thermoplastique et d'un revêtement extérieur métallique mince adhérant à ladite âme par l'intermédiaire d'une couche adhésive, caractérisé en ce que ladite âme est constituée d'un panneau sandwich composé d'une âme (10) thermoplastique, en nids d'abeille et de peaux (12, 12') réalisées en matière thermoplastique renforcée de fibres, disposées sur les faces supérieure et inférieure dudit panneau sandwich, perpendiculairement à l'axe des alvéoles et en ce que ledit revêtement métallique mince (16, 16') est fixé sur l'une au moins desdites faces du panneau sandwich par l'intermédiaire de ladite couche adhésive constituée d'une pellicule thermoscellable (14,14') insérée entre le panneau et chaque revêtement métallique mince (16, 16').

2. Panneau composite structurel, selon la revendication 1, caractérisé en ce que ladite pellicule thermoscellable (14, 14') est constituée d'un matériau thermoplastique notamment thermoplastique plus anhydride maléique.

3. Panneau composite structurel selon l'une quelconque des revendications précédentes, caractérisé en ce que le revêtement métallique (16, 16') est constitué d'aluminium et qu'il peut présenter la forme d'une tôle plane ou d'une pièce présentant une configuration déterminée.

4. Procédé de fabrication d'un panneau composite structurel selon l'une quelconque des revendications précédentes caractérisé en ce que ledit revêtement métallique (16, 16') est appliqué par l'intermédiaire de la pellicule thermoscellable (14, 14') sur ledit panneau, sous pression et à une température déterminée, intermédiaire entre le point de fusion de ladite pellicule thermoscellable et le point de fusion des matériaux constituant ledit panneau sandwich, pendant un temps suffisant pour permettre la fusion de ladite pellicule thermoscellable.

5. Procédé selon la revendication 4, caractérisé en ce que la pellicule thermoscellable (14, 14') est appliquée sur ledit revêtement métallique (16, 16') avant la constitution du panneau composite, en étuve ou sous pressse et à une température de l'ordre de 200 à 220°C, le revêtement métallique ainsi muni de sa pellicule thermoscellable étant ensuite appliqué sur l'une au moins desdites faces dudit panneau sandwich, positionné entre les plateaux d'une presse qui sont portés à ladite température déterminée.

6. Procédé selon la revendication 5, caractérisé en ce que les différents constituants du panneau composite structurel : panneau sandwich et revêtement métalliques préalablement munis de la pellicule thermoscellable correspondante sont placés entre les plateaux d'une presse, ou dans un moule, portés à ladite température déterminée.

7. Procédé selon la revendication 4, caractérisé en ce qu'il est mis en oeuvre en continu, en faisant passer entre des dispositifs chauffants à deux cylindres rotatifs (20, 20'), ou à chenilles, portés à ladite température déterminée, un ruban constitué par l'empilage dudit panneau sandwich, de la ou des pellicules thermoscellables et du ou des revêtements métalliques.

8. Procédé selon l'une quelconque des revendications 4 à 7, caractérisé en ce que ladite pellicule thermoscellable (14, 14') est formée à partir d'une poudre pouvant être appliquée sur le revêtement métallique correspondant par dépôt électrostatique ou en lit fluidisé.

9. Procédé selon l'une quelconque des revendications 4 à 7, caractérisé en ce que ladite pellicule thermoscellable (14, 14') est constituée d'un film thermoplastique perforé ou non.

## Claims

1. Composite structural panel, comprising a core of plastics material covered with a layer of a thermoplastics material and a thin metal outer covering adhering to said core by means of an adhesive layer, characterized in that said core is constituted of a sandwich panel, composed of a thermoplastic core (10) of honeycomb form and of membranes (12, 12') made of a fibre-reinforced thermoplastics material, disposed on the upper and lower faces of said sandwich panel perpendicularly to the axis of the cells, and in that said thin metal covering (16, 16') is fixed onto at least one of said faces of the sandwich panel by means of said adhesive layer constituted of a heat-sealable skin (14, 14') inserted between the panel and each thin metal covering (16, 16').

2. Composite structural panel according to claim 1, characterized in that said heat-sealable skin (14, 14') is formed of a thermoplastics material, notably thermoplastics plus maleic anhydride.

3. Composite structural panel according to any one of the preceding claims, characterized in that the metal covering (16, 16') is constituted of aluminium and that it may have the form of a flat sheet or a component possessing a determined configuration.

4. Process for the manufacture of a composite structural panel according to any one of the preceding claims, characterized in that said metal covering (16, 16') is applied by means of the heat-sealable skin (14, 14') onto said panel, under pressure and at a determined temperature intermediate between the fusion point of said heat-sealable skin and the fusion point of the materials constituting said sandwich panel, for a period sufficient to make possible the fusion of said heat-sealable skin.

5. Process according to claim 4, characterized in that the heat-sealable skin (14, 14') is applied onto said metal covering (16, 16') before the forming of the composite panel, in a drying oven or under a press, and at a temperature of the order of 200 to 220°C, the metal covering thus provided with its heat-sealable skin being then applied onto at least one of said faces of said sandwich panel, positioned between the plates of a press, which are brought to said determined temperature.

6. Process according to claim 5, characterized in that the different constituents of the composite structural panel: sandwich panel and metal coverings previously provided with the corresponding heat-sealable skin, are placed between the plates of a press, or in a mould, raised to said determined temperature.

7. Process according to claim 4, characterized in that it is carried out continuously, by causing a band formed by the stacking of said sandwich panel, of the heat-sealable skin or skins and of the metal covering or coverings, to pass between heating devices having two rotating cylinders (20, 20') or tracks, raised to said determined temperature.

8. Process according to any one of claims 4 to 7, characterized in that said heat-sealable skin (14, 14') is formed from a powder capable of being applied onto the corresponding metal covering by electrostatic deposition or in fluidized bed.

9. Process according to any one of claims 4 to 7, characterized in that said heat-sealable skin (14, 14') is constituted of a perforated or unperforated thermoplastics film.

## Patentansprüche

1. Strukturelle Verbundplatte, die einen Kunststoffkern umfaßt, der mit einer Thermoplastschicht und einer äußeren dünnen Metallbeschichtung überzogen ist, welche über eine Haftschicht an diesem Kern haftet, **dadurch gekennzeichnet, daß** der Kern aus einer Sandwichplatte besteht, die aus einem Thermoplastkern (10) aus wabenförmigen Zellen und zwei Häuten (12, 12'), die aus faserverstärktem Thermoplast hergestellt und auf der Ober- bzw. Unterseite der Sandwichplatte senkrecht zur Zellenachse angeordnet sind, zusammengesetzt ist, **und daß** die dünne Metallbeschichtung (16, 16') auf mindestens einer der Seiten der Sandwichplatte über die Haftschicht befestigt ist, welche aus einer heißsiegelbaren Folie (14, 14') besteht, die zwischen dieser Platte und der jeweiligen dünnen Metallbeschichtung (16, 16') eingefügt ist.

2. Strukturelle Verbundplatte nach Anspruch 1, **dadurch gekennzeichnet, daß** die heißsiegelbare Folie (14, 14') aus einem Thermoplast und insbesondere einem Thermoplast plus Maleinsäureanhydrid besteht.

3. Strukturelle Verbundplatte nach Anspruch 1 oder 2, **dadurch gekennzeichnet, daß** die Metallbeschichtung (16, 16') aus Aluminium besteht und die Form eines flachen Blechs oder eines Bauelements annehmen kann, das eine bestimmte Gestalt besitzt.

4. Verfahren zur Herstellung einer strukturellen Verbundplatte nach einem der vorhergehenden Ansprüche, **dadurch gekennzeichnet, daß** die Metallbeschichtung (16, 16') auf der Platte über die heißsiegelbare Folie (14, 14') unter Druck und bei einer festgelegten Temperatur, die zwischen dem Schmelzpunkt der heißsiegelbaren Folie und dem der Materialien liegt, welche diese Sandwichplatte bilden, innerhalb eines Zeitraums aufgebracht wird, der ausreicht, um diese heißsiegelbare Folie schmelzen zu lassen.

5. Verfahren nach Anspruch 4, **dadurch gekennzeichnet, daß** die heißsiegelbare Folie (14, 14') mit der Metallbeschichtung (16, 16') vor der Bildung der Verbundplatte in einem Ofen oder einer Presse bei einer Temperatur von etwa 200 bis 220 °C verbunden wird, wobei die mit der heißsiegelbaren Folie versehene Metallbeschichtung anschließend auf mindestens eine der Seiten der Sandwichplatte aufgebracht wird, die zwischen den Platten einer Presse angeordnet ist, welche auf die festgelegte Temperatur gebracht worden sind.

6. Verfahren nach Anspruch 5, **dadurch gekennzeichnet, daß** die unterschiedlichen Bestandteile der strukturellen Verbundplatte Sandwichplatte und Metallbeschichtungen, die zuvor mit der jeweiligen heißsiegelbaren Folie versehen worden sind, zwischen den Platten einer Presse oder in einer Form, welche auf die festgelegte Temperatur gebracht worden sind/ist, angeordnet werden.

7. Verfahren nach Anspruch 4, **dadurch gekennzeichnet, daß** es kontinuierlich durchgeführt wird, indem man zwischen beheizten Vorrichtungen mit zwei rotierenden Walzen (20, 20') oder mit Ketten, welche auf die festgelegte Temperatur gebracht worden sind, ein Band durchlaufen läßt, das aus einer Schichtung der Sandwichplatte, der/den heißsiegelbaren Folie/n und der/den Metallbeschichtung/en besteht.

8. Verfahren nach einem der Ansprüche 4 bis 7, **dadurch gekennzeichnet, daß** die heißsiegelbare Folie (14, 14') aus einem Pulver gebildet wird, das auf der entsprechenden Metallbeschichtung elektrostatisch oder aus einem Fluidbett aufgebracht werden kann.

9. Verfahren nach einem der Ansprüche 4 bis 7, **dadurch gekennzeichnet, daß** die heißsiegelbare Folie (14, 14') aus einem gegebenenfalls perforierten thermoplastischen Film besteht.
